# EUROPEAN PATENT APPLICATION

(11) **EP 4 451 036 A1**
(43) Date of publication of application: **23.10.2024**
(21) Application number: 23168376.4
(22) Date of filing: 18.04.2023
(51) Int. Cl.: G02B 21/36

(54) **APPARATUS FOR AN OPTICAL IMAGING SYSTEM, OPTICAL IMAGING SYSTEM, METHOD AND COMPUTER PROGRAM**

(71) Applicant: Leica Instruments (Singapore) Pte. Ltd., Singapore 608924 (SG)
(72) Inventor: YANG, Gao, Singapore 608924 (SG); ANG, Yan Eng, Singapore 608924 (SG)
(74) Representative: 2SPL Patentanwälte PartG mbB

(57) **Abstract**

Examples relate to an apparatus for an optical imaging system. The apparatus comprises one or more processors, a master storage device and a slave storage device. The apparatus is configured to set a data rate for reception of sensor data of a sensor of the optical imaging system. The sensor data is indicative of a live view of a sample through a microscope of the optical imaging system. The data rate is set by the master storage device. Further, the apparatus is configured to receive the sensor data based on the set data rate at the master storage device and at the slave storage device. The apparatus is further configured to store the received sensor data for transmission to a master display device. The sensor data for transmission to the master display device is stored at the master storage device. The apparatus is further configured to store the received sensor data for transmission to a slave display device. The sensor data for transmission to the slave display device is stored at the slave storage device. The apparatus is further configured to transmit the stored sensor data from the master storage device. Further, the apparatus is configured to transmit the stored sensor data from the slave storage device.

## Description

### Technical field

Examples relate to an apparatus for an optical imaging system, such as surgical optical imaging system, an optical imaging system, a method, and a computer program.

### Background

In surgical optical imaging system, a surgeon often uses a main pair of oculars or ocular displays to perform the surgical procedure. In many cases, the surgeon does not perform the surgical procedure alone, but with the help of an assistant. For this purpose, some surgical microscopes feature a second pair of oculars or ocular displays (called "side-assistant viewer"), which can be used by the assistant. Both, the main pair of oculars or oculars displays and the second pair of oculars or the ocular displays may receive the same live camera video. Further, the surgeon and the assistant may want to view different content. Therefore, multiple mixing devices may be necessary to achieve multiple video stream outputs with different content for each. However, the use of multiple mixing devices can be cost intensive, bulky and/or can lead to video feature mismatch. Computer based video mixing solutions introduce extra latency in the capture-and-display of videos, e.g., due to the use of a frame buffer.

Thus, there may be a desire for an improved concept for providing multiple video stream outputs for an optical imaging system.

### Summary

This desire is addressed by the subject-matter of the independent claims.

The concept proposed in the present disclosure is based on the insight, that multiple video stream outputs can be provided by use of a master storage device and a slave storage device. A data rate for a reception of sensor data at both storage devices can be set by the master storage device. Thus, the master storage device can control a data reception at the slave storage device. Further, the slave storage device can only transmit stored sensor data, e.g., to the slave display device, if the master storage device is transmitting data, e.g., to a master display device. In this way, the master storage device can control displayed information on a slave storage device indirectly.

Examples provide an apparatus for an optical imaging system. The apparatus comprises one or more processors, a master storage device and a slave storage device. The apparatus is configured to set a data rate for reception of sensor data of a sensor of the optical imaging system. The sensor data is indicative of a live view of a sample through a microscope of the optical imaging system. The data rate is set by the master storage device. Further, the apparatus is configured to receive the sensor data based on the set data rate at the master storage device and at the slave storage device. The apparatus is further configured to store the received sensor data for transmission to a master display device. The sensor data for transmission to the master display device is stored at the master storage device. The apparatus is further configured to store the received sensor data for transmission to a slave display device. The sensor data for transmission to the slave display device is stored at the slave storage device. The apparatus is further configured to transmit the stored sensor data from the master storage device, e.g., to the master display device. Further, the apparatus is configured to transmit the stored sensor data from the slave storage device, e.g., to the slave display device. The master storage device and the slave storage device may be different storage devices. Only the master storage device may be capable of setting the data rate for the reception of the sensor data. Thus, the slave storage device may not be capable of adjusting a data rate for the reception of the sensor data. For example, a reception of the sensor data at the slave storage device can only be adapted by the master storage device. The slave storage device can only transmit stored sensor data, e.g., to the slave display device if the master storage device is transmitting stored sensor data, e.g., to the master display device, for example. Thus, the slave display device may only display information if the master display device is also displaying information at the same time. The master display device may be different from the slave storage device. Thus, information can be displayed on different display devices. By allowing only the master storage device to set the data rate for the reception, the master storage device can adjust a stable state, e.g., to prevent overload or ensure equitable distribution of resources, in a facilitated way. The slave storage device can lock onto the timing of the master storage device, when the master storage device is at a stable state. In this way, multiple video stream outputs with low latency can be generated by using only one master storage device and at least one slave storage device.

In an example, the apparatus may be further configured to obtain information about a used storage capacity of the master storage device and to set the data rate based on the used storage capacity. The used storage capacity may be a written storage space of the master storage device. For example, the used storage capacity may be not available for storing further sensor data. Thus, a memory load of the master storage device can be determined based on the used storage capacity by the apparatus. In this way, the data rate can be set depending on available storage space of the master storage device.

In an example, the apparatus may be further configured to set the data rate by throttling the data rate in response to determining that the master storage devices is full. Throttling can be used to regulate the rate at which data is written to the master storage device, e.g., in order to prevent stuttering or tearing. For example, if the master storage device is being written to faster than it can be read, the apparatus may temporarily decrease the data rate to allow the master storage device to catch up. For example, the fact that the master storage devices is full may indicate that the master storage devices is being written to faster that can be read. In this way, the apparatus can adjust the set data rate if necessary. For example, the apparatus can adjust the set data rate iteratively.

In an example, the apparatus may be further configured to generate ability data indicative of an ability of the master storage device to store the sensor data. Further, the apparatus may be configured to set the data rate by transmitting an acknowledgment (ACK) signal based on the ability data. The ACK signal can be transmitted to the optical imaging system. The ACK signal may be indicative of the set data rate. For example, when writing data to the master storage device, the sending device, e.g., a producer, such like a sensor or storage device (e.g., from an image processing device) of the optical imaging system, can use an ACK signal to determine whether a receiving device (the master storage device) has processed the previous block of data before sending the next block. This can help to ensure that the master storage device is not overwhelmed with sensor data. Further, this can help to ensure that sensor data is written to the master storage device at a rate that is consistent with a refresh rate of a display device. The apparatus may receive an ACK signal from the sending device and may transmit in response the ACK signal indicative the set data rate, for example. In this way, data transfer between the sending device and the master storage device can be adjusted in a facilitated way.

In an example, the apparatus may be further configured to receive the sensor data at the slave storage device based on the storage capacity of the slave storage device. Thus, an overload of the slave storage device can be prevented.

In an example, the apparatus may be further configured to stop the reception of the sensor data at the slave storage device in response to determining that the slave storage device is full. Thus, if the slave storage device is full, a reception of the sensor data at the slave storage device can be stopped. In this way, the apparatus can prevent an overload of the slave storage device.

In an example, the apparatus may be further configured to stop the reception of the sensor data at the slave storage device by opening a switch. In this way, the reception of the sensor data can be stopped in a facilitated way.

In an example, the apparatus may be further configured to reset the slave storage device in response to determining that the switch is opened. In an example, the apparatus may be further configured to reset the slave storage device in response to determining that the slave storage device is full. For example, the slave storage device can be purged by the reset. In this way, the slave storage device can be set up to receive further sensor data in a facilitated way.

In an example, the apparatus may be further configured to reestablish the reception of the sensor data at the slave storage device in response to determining a frame delimiter of a frame of the sensor data. Thus, by determining a frame delimiter the apparatus can determine an appropriate time to store new sensor data, e.g., a begin of a frame and/or an end of a frame. In this way, the apparatus can easily lock the slave storage device onto the same frame as the master storage device.

In an example, the apparatus may be further configured to reestablish the reception of the sensor data at the slave storage device by closing the switch. In this way, the reestablishment of the reception of the sensor data can be performed in a facilitated way.

In an example, the apparatus may be configured to store the sensor data in a first-in-first-out, FIFO, queue in the master storage device and/or the slave storage device. A FIFO queue may be used to temporarily hold data as it flows between different components in a system, e.g., a sensor of the optical imaging system and a display device. FIFO queues may be useful for managing data while preserving the order of items is important. In this way, by using a FIFO queue low latency of a video stream output can be achieved.

In an example, the apparatus may further comprise a first mixer device and a second mixer device. The stored sensor data from the master storage device may be transmitted to the first mixer device and the stored sensor data from the slave storage device may be transmitted to the second mixer device. This may allow the same live view to be transmitted to different mixer devices with low latency, especially lower latency than can be achieved by using a frame buffer. In this way, latency for displaying multiple video stream outputs can be reduced.

In an example, the apparatus may be further configured to receive auxiliary data indicative of auxiliary information for a user of the optical imaging system. The auxiliary data may be received at the first mixer device and/or the second mixer device. Further, the apparatus may be configured to generate a visual overlay of the received sensor data and the auxiliary data. In this way, separate different video stream outputs can be generated by the apparatus.

In an example, the apparatus may be further configured to transmit a first output signal to the master display device. The first output signal can be transmitted from the first mixer device. Further, the apparatus may be configured to transmit a second output signal to the slave display device. The second output signal can be transmitted from the second mixer device. The second output signal is different from the first output signal. The first output signal and/or the second output signal is indicative of the generated visual overlay. Thus, the apparatus can transmit the visual overlay to a display device to control or trigger displaying the information to a user. In this way, the user can easily receive the information of the visual overlay.

In an example, the apparatus may further comprise a second master storage device and a second slave storage device. The apparatus may be further configured to set a second data rate for reception of second sensor data of a second sensor of the optical imaging system. The second data rate may be set by the second master storage device. The second sensor data is indicative of a live view of the sample through microscope of the optical imaging system from a second view. Further, the apparatus may be further configured to receive the second sensor data based on the set second data rate at the second master storage device. The apparatus may be further configured to store the received second sensor data for transmission to the master display device and/or the slave display device at the second master storage device. The apparatus may be further configured to transmit the stored second sensor data from the second master storage device. In this way, sensor data from multiple sensors can be combined to be displayed to the user.

In an example, the second sensor data may be transmitted to the first mixer device or the second mixer device. In this way, the first mixer device can generate the visual overlay comprising sensor data of multiple sensors.

In an example, the apparatus may be further configured to generate a three-dimensional representation of the live view based on the sensor data and the second sensor data. Further the apparatus may be configured to transmit from the first mixer device or the second mixer device to the master display device or the slave display device the first output signal or the second output signal indicative of the three-dimensional representation. In this way, the user can receive a three-dimensional representation of the live view in a facilitated way.

Examples relate to an optical imaging system comprising an apparatus as described above.

Examples relate to a method comprising setting a data rate for a reception of sensor data of a sensor of the optical imaging system. The data rate is set by a master storage device. The sensor data is indicative of a live view of a sample through a microscope of the optical imaging system. The method further comprises receiving, at the master storage device and at the slave storage device, the sensor data based on the set data rate. Further, the method comprises storing, at the master storage device, the received sensor data for transmission to a master display device. The method further comprises storing, at the slave storage device, the received sensor data for transmission to a slave display device. Further, the method comprises transmitting the stored sensor data to a master display device from the master storage device. Further, the method comprises transmitting the stored sensor data to a slave display device, from the slave storage device.

Various examples of the present disclosure relate to a corresponding computer program with a program code for performing the above method when the computer program is executed on a processor.

### Short description of the Figures

Some examples of apparatuses and/or methods will be described in the following by way of example only, and with reference to the accompanying figures, in which
Figs. 1a and 1b show schematic diagrams of an example of an apparatus for an optical imaging system and of a corresponding optical imaging system comprising the apparatus;
Fig. 2a shows a schematic diagram of an example of a camera for an optical imaging system comprising a first apparatus and an optional second apparatus;
Fig. 2b shows a schematic diagram of an example of the apparatus shown in Fig. 2a;
Fig. 2c shows a schematic diagram of an example of a mixer device shown in Fig. 2a;
Fig. 3 shows a schematic diagram of another example of an apparatus shown in Fig. 2a;
Fig. 4 shows a flow chart of an example of a method for an optical imaging system; and
Fig. 5 shows a schematic diagram of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

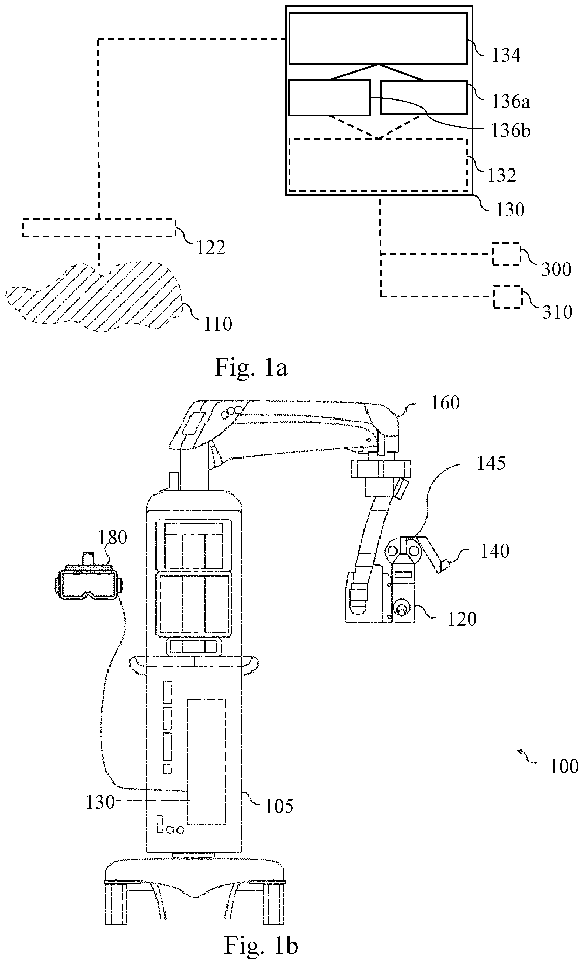

Figs. 1a and 1b show schematic diagrams of an example of an apparatus 130 for an optical imaging system 100 and of a corresponding optical imaging system 100 comprising the apparatus 130. The apparatus 130 is tasked with controlling various aspects of a microscope 120 of the optical imaging system 100, which may be a surgical optical imaging system, and of the entire optical imaging system 100 and/or with processing various types of sensor data of the optical imaging system 100. Consequently, the apparatus 130 may be implemented as a computer system, which interfaces with the various components of the optical imaging system, e.g., the sensor 122.

The apparatus 130 comprises, as shown in Fig. 1a, one or more processors 134, a master storage device 136a and a slave storage device 136b. Optionally, the apparatus 130 further comprises one or more interfaces 132. The one or more processors 134 are coupled to the master storage device 136a and the slave storage device 136b and to the optional one or more interfaces 132. In general, the functionality of the apparatus 130 may be provided by the one or more processors 134 (e.g., for setting the data rate), in conjunction with the one or more interfaces 132 (for exchanging information, e.g., with the sensor 122 or a storage device of the optical imaging system 100 for receiving the sensor data and/or transmitting stored sensor data to a receiving device, such like a display device) and/or with the one or more storage devices 136 (for storing and/or retrieving information).

A user of an optical imaging system may want different display format (e.g., two-dimensional, 2D, and three-dimensional, 3D) or add-on information for different video stream outputs based on the same clean live camera video feed. For example, each video stream output may also use a different resolution or color format. For example, for heads-up surgery, a 3D display can show a 3D video stream with live instrument status and surgical guidance, while a documentation system can receive a 2D video stream for recording with only a time stamp. To provide this multiple video stream outputs frame buffers can be used. A latency of a frame buffer is determined by the time it takes to write the pixel data for an entire frame to a memory device and the time it takes to retrieve and display that frame on a screen. This latency can be impacted by factors such as the resolution and refresh rate of the display, the speed of the memory device used for the frame buffer, and the efficiency of the system's graphics processing pipeline.

However, this latency may lead to a decreased user experience. To decrease the latency of the multiple video stream outputs, the apparatus 130 comprises the master storage device 136a and the slave storage device 136b. Neither the master storage device 136a nor the slave storage device 136b act as a frame buffer. Thus, an alignment of both may be important for the performance of the apparatus 130. To ease alignment of the master storage device 136a with the slave storage device 136b, only the master storage device 136a may be allowed to limit the amount of data (or requests) that can be processed.

To limit the amount of data (or requests), the apparatus 130 is configured to set a data rate for a reception of sensor data of the sensor 122 of the optical imaging system 100. The data rate is set by the master storage device 136a. The sensor data is indicative of a live view of a sample 110 through a microscope 120 of the optical imaging system 100. The sensor data may be received from a transmitting device, e.g., a producer. The transmitting device may be the sensor 122 of the optical imaging system or a storage device (e.g., part of a image processing device) of the optical imaging system, for example.

For example, the master device 136a can set the data rate by applying back-pressure to a transmitting device, e.g., by throttling or rate limiting, or by applying frame dropping. The slave storage device 136b may be not capable of setting the data rate.

Data rate refers to the amount of data that can be transferred between the master storage device 136a (and the slave storage device 136b) and the transmitting device, e.g., the sensor 122, per unit of time. For example, the data rate may represent the speed at which data can be written to (or read from) the master storage device 136a (and the slave storage device 136b). The data rate of the master storage device 136a (and the slave storage device 136b) can be affected by various factors, such as the memory technology used, the bus speed, and the width of the interface 132. Higher data rates may generally lead to better graphics performance, as they allow for faster data transfers between the master storage device 136a and other components.

Live view refers to a real-time display of the sample 110. For example, a live view may allow the user to see a continuous and up-to-date display of the sample 110 being acquired by the microscope 120.

The apparatus 130 is further configured to receive (after setting the data rate) the sensor data based on the set data rate. The sensor data is received at the master storage device 136a and at the slave storage device 136b. For example, the sensor data may be received from the sensor 122 or a storage device, e.g., part of an image processing device, or a frame buffer. The sensor 122, the storage device or the frame buffer may be part of a camera of the optical imaging system 100.

As the data rate is set by the master storage device 136a, the slave storage device 136b can only receive sensor data at a (maximum) data rate identical to a (maximum) data rate at the master storage device 136a. In this way, the master storage device 136a and the slave storage device 136b can be aligned. For example, the slave storage device 136b can lock onto a timing of the master storage device 136a.

For example, if a downstream rate from the slave storage device 136b is larger than a downstream rate from the master storage device 136a, the slave storage device 136b can be limited to an upstream rate of the master storage device 136a corresponding to the downstream rate of the master storage device 136a. In this way, the slave storage device 136b can only receive the sensor data at the same data rate as the master storage device 136a. Upstream typically refers to the process of writing data into a storage device, while downstream refers to the process of reading data from a storage device. Thus, receiving the sensor data may be an upstream process. The upstream process may involve pushing data into the storage device. This could be done by a transmitting device, e.g., a producer, such as the sensor 122 or a data generator, that is generating the data to be stored in the storage device, such like an image processing device.

To allow upstream and downstream, the apparatus 130 is further configured to store the received sensor data at the master storage device 136a and to store the received sensor data at the slave storage device 136b. The sensor data stored at the master storage device 136a is for transmission to a master display device 300. The sensor data stored at the slave storage device 136b is for transmission to a slave storage device 136b. For example, the stored sensor data is to be displayed on the master display device 300 or the slave storage device 136b, respectively.

Further, the apparatus 130 is configured to transmit the stored sensor data from the master storage device 136a and to transmit the stored sensor data from the slave storage device 136b. Transmitting the stored sensor data may be a downstream process. A downstream process may involve reading data from a storage buffer. This could be done by a receiving device, e.g., a consumer, such as a processor, a mixer device or a display device 300, 310, that is using the sensor data stored in storage device. A downstream rate may depend on the receiving device. For example, the master display device 300 may have a different downstream rate than the slave display device 310.

For example, different receiving devices, such like a master display device 300 and a slave display device 310 or a master mixer device and a slave mixer device may receive the stored data from the different storage devices 136a, 136b. The master display device 300 may receive the stored sensor data from the master storage device 136a. The slave display device 310 may receive the stored sensor data from the slave display device 310. The stored sensor data at the slave storage device 136b can be only transmitted if the stored sensor data at the master storage device 136a is transmitted. Thus, it can be ensured that both display devices 300, 310 are aligned. In this way, the slave display device 310 can display information, e.g., the live view, to a user only if the master display device 300 is also displaying information, e.g., the live view, to the user.

For example, if the apparatus 130 does not transmit stored sensor data from the master storage device 136a, the master display device 300 may not be capable of displaying the live view. In this case, also the slave display device 310 may not be capable of displaying the live view. The apparatus 130 may not transmit stored sensor data from the slave storage device 136b, when no stored sensor data is transmitted from the master storage device 136a. Thus, it can be ensured that the live view is adjusted to the master display device 300.

Further, a latency of displaying the sensor data on the master display device 300 and/or on the slave display device 310 can be reduced. In contrast to a frame buffer not a whole frame needs to be stored in the master storage device 136a and/or the slave storage device 136b. A delay can occur by a frame buffer because image data is first stored in the frame buffer before it is displayed on a display device.

For live view, such as video or real-time camera feeds, this delay can be noticeable and problematic, e.g., during an operation. The delay can make it difficult to react quickly to changes in the scene, such as tracking a moving object or adjusting camera settings in response to changes in lighting.

To minimize latency, some systems use techniques such as double buffering or triple buffering, where multiple frames are stored in the frame buffer and the most recently captured frame is displayed on the screen as soon as possible. This can help reduce the delay between capturing an image and displaying it on the screen, but it can also increase the memory requirements and processing overhead of the system. However, a minimum latency of such systems is still one frame, whereas the apparatus 130 can offer a sub-frame level of latency. Using the apparatus 130 can reduce the latency on sub-frame level, still overing multiple video stream outputs for multiple display devices at low memory requirements and reducing or avoiding processing overhead.

The above and below description refers to displaying the stored sensor data on a master display device 300 and a slave display device 310. However, the stored sensor data can only be displayed on the master display device 300. For example, only the stored sensor data from the master storage device 136a may be displayed on the master display device 300, whereas no information may be displayed on the slave display device 310.

The proposed concept may be built around two main components - the microscope 120, which comprises the optical components, and which may house the display device 300 being used to view the sample 110, and the apparatus 130, which may be used to control the optical imaging system 100, process sensor data of the microscope 120, e.g., the sensor 122, and/or to set the data rate.

In general, a microscope, such as the microscope 120, is an optical instrument that is suitable for examining objects that are too small to be examined by the human eye (alone). For example, a microscope 120 may provide an optical magnification of a sample, such as a sample 110 shown in Fig. 1a. In modern microscopes, the optical magnification is often provided for a camera or an imaging sensor, such as the optical imaging sensors 122 of the microscope 120. The microscope 120 may further comprise one or more optical magnification components that are used to magnify a view of the sample 110, such as an objective.

There are a variety of different types of optical imaging systems. If the optical imaging system 100 is used in the medical or biological fields, the sample 110 may be a sample of organic tissue, e.g., arranged within a petri dish or present in a part of a body of a patient. In some examples of the present disclosure, e.g., as shown in Fig. 1b, the optical imaging system 100 may be a surgical optical imaging system, e.g., an optical imaging system that is to be used during a surgical procedure, such as an oncological surgical procedure or during tumor surgery. However, the proposed concept may also be applied to other types of microscopy, e.g., microscopy in a laboratory or microscopy for the purpose of material inspection.

As is evident, the optical imaging system 100 comprises a number of components, such as the apparatus 130, the microscope 120 with the at least one optical imaging sensors 122, an optional main pair of ocular displays 140, an optional secondary pair of ocular displays 145 and a head-mounted display 180. In the configuration shown in Fig. 1a, the microscope 120 may be a non-stereoscopic microscope 120 that only supports a two-dimensional view of the sample 110 using the sensor 122. However, other implementations may be possible, such as an implementation with a single pair of optical imaging sensors for visible light imaging, or a pair of optical imaging sensors for visible light and fluorescence imaging, or four image sensors for both visible light (reflectance) imaging and fluorescence imaging, two optical imaging sensors for providing the two stereo channels for visible light imaging and two optical imaging sensors for providing the two stereo channels for fluorescence imaging.

In an example, the apparatus 130 may be further configured to obtain information about a used storage capacity of the master storage device 136a and to set the data rate based on the used storage capacity. For example, the storage capacity may be the amount of data the master storage device 136a can store. Thus, by obtaining information about the used storage capacity the apparatus 130 can determine a memory load of the master storage device 136a. For example, if the used storage capacity is close to a storage capacity of the master storage device 136a (e.g., 80% or 90% of the memory is written) the apparatus 130 may reduce the data rate. In contrast, if the used storage capacity comprises a low amount of the storage capacity of the storage device (e.g., 10% or 20%) the apparatus 130 may increase the data rate. In this way, the data rate can be set based on an actual memory load of the master storage device 136a.

In an example, the apparatus 130 may be further configured to set the data rate by throttling the data rate in response to determining that the master storage device 136a is full. If the master storage device 136a is full no further sensor data can be written to the master storage device 136a. For example, if a downstream rate is lower in than an upstream rate, the master storage device 136a may be full after a certain time. In this case, the sensor data from the upstream can be lost. Thus, the apparatus 130 may reduce the data rate for the reception of the sensor data. For example, the apparatus 130 may reduce the data rate iteratively. The apparatus 130 may reduce the data rate multiple times, e.g., until the data rate is at most the downstream rate (e.g., equal to the downstream rate of the master storage device 136a).

In an example, the apparatus 130 may be further configured to generate ability data indicative of an ability of the master storage device 136a to store the sensor data. Further, the apparatus 130 may be configured to set the data rate by transmitting an ACK signal based on the ability data. The ACK signal can be transmitted to the optical imaging system, e.g., to the sensor 122. The ACK signal may be indicative of the set data rate. For example, the ability data may be indicative of a load of the master storage device 136a and/or a downstream rate of the master storage device 136a (based on an upstream rate of the master display device 300, for example).

An ACK signal can be used to indicate that data, e.g., the sensor data, has been successfully received and stored by the master storage device 136a. Further, the apparatus 130 can also use the ACK signal to inform the transmitting device about set data rate. In this way, the transmitting device can be informed about the set data rate in a facilitated way.

In an example, the apparatus 130 may be further configured to receive the sensor data at the slave storage device 136b based on the storage capacity of the slave storage device 136b. For example, the slave storage device 136b can only receive sensor data if free storage space is available. For example, if the slave storage device 136b is full (the slave storage device 136b has a memory load of 100%), the slave storage device 136b may not be capable for receiving the sensor data. The storage capacity may be indicative of a free storage capacity of the slave storage device 136b. In this way, it can be ensured that the slave storage device 136b can store the received sensor data.

In an example, the apparatus 130 may be further configured to stop the reception of the sensor data at the slave storage device 136b in response to determining that the slave storage device 136b is full. By stopping the reception of the sensor data an overload of the slave storage device 136b can be prevented. In this way, a functionality of the slave storage device 136b can be maintained.

In an example, the apparatus 130 may be further configured to stop the reception of the sensor data at the slave storage device 136b by opening a switch. A switch may be designed to receive, process, and forward data packets between transmitting device (e.g., the sensor 122) and receiving device (e.g., the slave storage device 136b). By opening the switch a connection between the slave storage device 136b and the transmitting device can be interrupted. In this way, no further sensor data can be received at the slave storage device 136b.

In an example, the apparatus 130 may be further configured to reset the slave storage device 136b in response to determining that the switch is opened. In an example, the apparatus 130 may be further configured to reset the slave storage device 136b in response to determining that the slave storage device 136b is full. By resetting the slave storage device 136b storage space of the slave storage device 136b can be released. Thus, a memory load of the slave storage device 136b may be set to 0%. Releasing the storage space of the slave storage device 136b may allow the slave storage device 136b to lock onto a timing of the master storage device 136a.

For example, if an upstream rate of the master storage device 136a is higher than an upstream rate of the slave storage device 136b, the slave storage device 136b may be full after a certain time. In this case, the live view displayed on the slave display device 310 could be delayed in comparison to the live view displayed on the master display device 300. After a reset the slave storage device 136b can lock onto the timing of the master storage device 136a again. Thus, a delay between the live view displayed on the master storage device 136a and the slave storage device 136b can be reduced. In this way, a user experience can be increased.

For example, multiple video sources and sinks of the optical imaging system 100 may have a substantially same data rate. This may be achieved by sharing the same clock signal. In steady state, the master storage device 136a and/or the slave storage device 136 b may only filter out occasional jitters.

A sink (e.g., Standard Digital Interface/ High-Definition Multimedia Interface/ Display ports video transmitter subsystem), when operating connected to a source (e.g., a transmitting device) exclusively, may try to find a few consecutive start-of-frame signals. Based on these consecutive start-of-frame signals it may adjust its internal states to match the timing of the incoming data. During this process, the sink may sometimes need to hold back the incoming data momentarily and/or may need to purge the data completely if inconsistencies are detected. However, when such a sink is operating with a slave storage device 136b, the sink does not have the freedom in controlling the data flow.

Thus, when the slave storage device 136b is full, it may show the corresponding sink that it is not yet stable in transmitting stored sensor data. A reset of and a subsequent pause of data transfer from the slave storage device 136b may cause a timeout of the sink. In this way, the sink can restart the timing matching when a new frame starts to arrive, without the incomplete data causing confusion otherwise. Thus, the slave storage device 136b can lock onto the timing of the master storage device 136a.

The apparatus 130 may allow to provide no observable delay between a master display device output and a slave display device output (bar the display device difference). Instead, a substantial difference between different transmitting devices may cause the slave storage device 136b to have data underflow and/or overflow, depending on the actual timing offset, and soon loss of synchronization, resulting in a loss of transmission of stored sensor data.

In an example, the apparatus 130 may be further configured to reestablish the reception of the sensor data at the slave storage device 136b in response to determining a frame delimiter of a frame of the sensor data. A frame delimiter can be a special marker or signal that indicates the start and/or the end of a video frame, e.g., a video frame of the live view. By determining a frame delimiter of a frame of the sensor data the slave storage device 136b can lock onto the timing of the master storage device 136a in an improved way.

In an example, the apparatus 130 may be configured to store the sensor data in a first-in-first-out, FIFO, queue in the master storage device 136a and/or the slave storage device 136b. Using the FIFO queue may provide order preservation, data integrity, flow control and/or a simplified design. Alternatively, to a FIFO queue other buffers for temporary storing and managing data can be used, such like last-in-first-out.

In an example, the apparatus 130 may further comprise a first mixer device and a second mixer device. The stored sensor data from the master storage device 136a may be transmitted to the first mixer device and the stored sensor data from the slave storage device 136b may be transmitted to the second mixer device. Using different mixer devices may allow to generate different video stream outputs for different display devices, such like the master display device 300 and the slave display device 310. A mixer device may mix the live view with further information, such like auxiliary data. For example, the mixer device may put one pixel of auxiliary data on top of one pixel of the live view. In this way, additional information can be provided for a user.

In an example, the apparatus 130 may be further configured to receive auxiliary data indicative of auxiliary information for a user of the optical imaging system. The auxiliary data may be received at the first mixer device and/or the second mixer device. Further, the apparatus 130 may be configured to generate a visual overlay of the received sensor data and the auxiliary data. For example, the visual overlay may comprise the live view and auxiliary data, e.g., indicative of a required orientation of a structure, e.g., a toric lens, used during an operation. In this way, a video stream output can be adjusted to a need of the user.

In an example, the apparatus 130 may be further configured to transmit a first output signal to the master display device 300. The first output signal can be transmitted from the first mixer device. Further, the apparatus 130 may be configured to transmit a second output signal to the slave display device 310. The second output signal can be transmitted from the second mixer device. The second output signal is different from the first output signal. The first output signal and/or the second output signal is indicative of the generated visual overlay. Using two different output signals may allow the apparatus 130 to trigger displaying different information on different display devices in a facilitated way. Alternatively, the apparatus 130 can control displaying first information on the master display device 300 and displaying second information, different from the first information, on the slave display device 310. For example, the first output signal and/or the second output signal can be used by the apparatus 130 to control the master display device 300 and/or the slave display device 310.

In an example, the apparatus 130 may further comprise a second master storage device 136a and a second slave storage device 136b. The apparatus 130 may be further configured to set a second data rate for reception of second sensor data of a second sensor of the optical imaging system. The second data rate may be set by the second master storage device 136a. The second sensor data is indicative of a live view of the sample through microscope of the optical imaging system from a second view. The sensor data of the sensor 122 may be first sensor data. The first sensor data is indicative of a live view of the sample from a first view. The second view may be different from the first view. For example the second sensor data may show the sample 110 from another perspective than the first sensor data. Further, the apparatus 130 may be further configured to receive the second sensor data based on the set second data rate at the second master storage device 136a. The apparatus 130 may be further configured to store the received second sensor data for transmission to the master display device 300 and/or the slave display device 310 at the second master storage device 136a. The apparatus 130 may be further configured to transmit the stored second sensor data from the second master storage device 136a. In this way, sensor data from multiple sensors can be combined to be displayed to the user.

In an example, the second sensor data may be transmitted to the first mixer device or the second mixer device. In this way, the first mixer device or the second mixer device can generate the visual overlay comprising sensor data of multiple sensors. For example, the first sensor data stored in the (first) master storage device 136a and the second sensor data stored in the second master storage device 136a can be transmitted to the first video mixer. This may allow the first video mixer to generate a 3D video stream output. The 3D video stream output can be displayed on the master display device 300.

In an example, the apparatus 130 may be further configured to generate a 3D representation of the live view based on the (first) sensor data and the second sensor data. Further the apparatus 130 may be configured to transmit from the first mixer device or the second mixer device to the master display device 300 or the slave display device 310 the first output signal or the second output signal indicative of the three-dimensional representation. In this way, the user can receive a 3D representation of the live view in a facilitated way.

Fig. 1b shows a schematic diagram of an example of a surgical optical imaging system 100 comprising the microscope 120 and the apparatus 130. In general, a (surgical) optical imaging system is a system that comprises a microscope 120 and additional components, which are operated together with the microscope 120. In other words, a (surgical) optical imaging system is a system that comprises the microscope 120 and one or more additional components, such as the apparatus 130 (which may be a computer system being adapted to control and, for example, generate the control signal), an illumination system (which is used to illuminate a sample being imaged by the microscope 120), additional sensors, displays etc.

The surgical optical imaging system 100 shown in Fig. 1b comprises a number of optional components, such as a base unit 105 (which may comprise the apparatus 130) with a stand, ocular displays 140; 145 that are arranged at the microscope 120, a head-mounted display 180, and a (robotic or manual) arm 160 which holds the microscope 120 in place, and which is coupled to the base unit 105 and to the microscope 120. In general, these optional and nonoptional components may be coupled to the apparatus 130, which may be configured to control and/or interact with the respective components.

As shown in Fig. 1a the optional one or more interfaces 132 is coupled to the respective one or more processors 134 at the apparatus 130. In examples the one or more processors 134 may be implemented using one or more processing units, one or more processing devices, any means for processing, such as a processor, a computer or a programmable hardware component being operable with accordingly adapted software. Similar, the described functions of the one or more processors 134 may as well be implemented in software, which is then executed on one or more programmable hardware components. Such hardware components may comprise a general-purpose processor, a Digital Signal Processor (DSP), a micro-controller, etc. The one or more processors 134 is capable of controlling the one or more interfaces 132, so that any data transfer that occurs over the one or more interfaces 132 and/or any interaction in which the one or more interfaces 132 may be involved may be controlled by the one or more processors 134.

In an embodiment the apparatus 130 may comprise a memory, e.g., the one or more storage devices 136 and at least one or more processors 134 operably coupled to the memory and configured to perform the method described below.

In examples the one or more interfaces 132 may correspond to any means for obtaining, receiving, transmitting or providing analog or digital signals or information, e.g., any connector, contact, pin, register, input port, output port, conductor, lane, etc. which allows providing or obtaining a signal or information. The one or more interfaces 132 may be wireless or wireline and it may be configured to communicate, e.g., transmit or receive signals, information with further internal or external components.

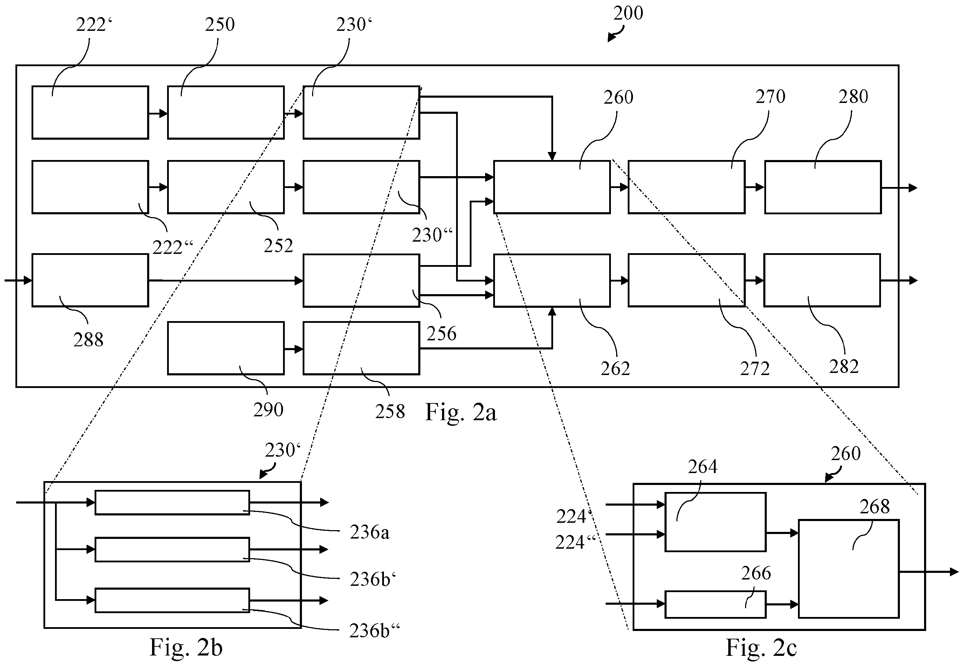

The apparatus 130 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system. The apparatus 130 may be part of the sensor 122. Alternatively, the apparatus 130 may be part of a camera comprising the sensor 122 and optionally a second sensor, e.g., as described with reference to Fig. 2.

More details and aspects are mentioned in connection with the examples described below. The example shown in Fig. 1 may comprise one or more optional additional features corresponding to one or more aspects mentioned in connection with the proposed concept or one or more examples described below (e.g., Fig. 2 - 5).

Fig. 2a shows a schematic diagram of an example of a camera 200 for an optical imaging system comprising a first apparatus 230' and an optional second apparatus 230". The apparatus 230' and/or the apparatus 230" may be an apparatus as described with reference to Fig. 1.

The camera 200 may comprise a first image sensor 222' to acquire a first live view and an optionally second image sensor 222" to acquire a second live view. The first live view is different from the second live view, e.g., a live view from a different perspective. First sensor data acquired by the first image sensor 222' may be transmitted from the first image sensor 222' to a first image processing device 250. The first image processing device 250 may process the first sensor data, e.g., compress, filter and/or transform the first sensor data. After processing the first processing device 250 may transmit the (processed) first sensor data to the first apparatus 230'.

Second sensor data acquired by the second image sensor 222" may be transmitted from the second image sensor 222" to a second image processing device 252. The second image processing device 252 may process the second sensor data, e.g., compress, filter and/or transform the second sensor data. After processing the first processing device 252 may transmit the (processed) second sensor data to the second apparatus 230".

Fig. 2a illustrates a stereoscopic 3D camera system with two types of graphical overlay and two video stream outputs. In practice, it can have one or more image sensors 122a, 122b, with the intended video output being 2D, 3D stereoscopic, or multi-view. There can be one or more video overlay sources, internal, e.g., an overlay renderer device 290 or external, e.g., a video input interface 288, and/or multiple video outputs 280, 282 with different physical connection type, resolution, color format, and/or frame rate, for example.

The video stream, i.e., the live view, from each image sensor may be processed and transmitted to an apparatus 230', 230" for transmission onto multiple mixer devices 260, 262. For example, the first sensor data stored at the first apparatus 230' may be transmitted to a first mixer device 260. For example, the second sensor data stored at the second apparatus 230" may be transmitted to a second mixer device 262.

In the meantime, auxiliary data from video overlay sources, e.g., external 288 and/or internal 290 may be stored in frame buffers 256, 258 to provide graphical and/or video overlays. The auxiliary data may be transmitted to mixer devices 260, 262. For example, first auxiliary data from the external video overlay source 288 may be transmitted to a first frame buffer 256 and transmitted from the first frame buffer 256 to the first mixer device 260 and the second mixer device 262. Second auxiliary data from the internal video overlay source may be transmitted to a second frame buffer 258 and from the second frame buffer 258 to the second mixer device 262.

The sensor data may be combined into a single video stream at each mixer devices 260, 262. For example the first mixer device 260 may combine the first sensor data, the second sensor data and the first auxiliary data. The second mixer device 262 may combine the first sensor data, the first auxiliary data and the second auxiliary data. In this way, multiple different video streams can be generated.

These streams then individually may go through video converter devices 270, 272 to match the video format required and then may be output through physical interface ports 280, 282.

Fig. 2b shows a schematic diagram of an example of the apparatus 230' shown in Fig. 2a. The apparatus 230' is also referred to as signal broadcaster. The signal broadcaster 230' shown in Fig. 2b uses multiple FIFO queues to allow slight difference in video frame timing between different outputs. Because the video stream outputs may start steady video stream output at different times due to initialization sequence and external display response, the signal broadcaster 230' may only allow the master storage device 236a to set the data rate for reception of sensor data. For example, the master storage device 236a may apply back-pressure (e.g., throttle master data rate based on slave readiness). When the master storage device 236a is stable, the slave storage devices 236b', 236b" can lock onto the timing of the master storage device 236a, e.g., onto the timing of the channel of the master storage device 236a. For example, the slave storage device 236b' may perform multiple trials and resets, without affecting the other slave storage device 236b" and vice versa. Because the live video streams do not go through frame buffers, low latency can be ensured for the multiple video stream outputs.

Fig. 2c shows a schematic diagram of an example of a mixer device 260 shown in Fig. 2a. In the mixer device 260, multiple live video streams 224', 224", e.g., the live view of the first sensor data 224' and the live view of the second sensor data 224" may be combined to form a single video stream in a 2d/3D formatter device 264. This could be switching between 2D and 3D videos and/or overlay of live video between different modalities. This video stream output can then be alpha-blended in an alpha-blender device 268 with an optionally decoded overlay from a decoder device 266 to form the full output video stream output for an output channel. The decoding module could utilize custom data formats including alpha channel and compression to achieve complex effects.

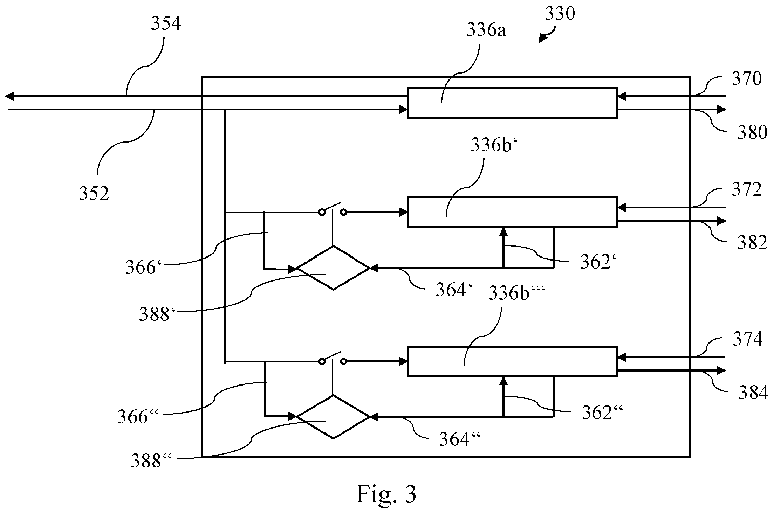

More details and aspects are mentioned in connection with the examples described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 5).

Fig. 3 shows a schematic diagram of another example of an apparatus 330 shown in Fig. 2a. The apparatus 330, respectively the signal broadcaster 330, may comprise a master storage device 336a, a first slave storage device 336b' and a second slave storage device 336b". The signal broadcaster 330 may receive sensor data indicated by the arrow 352. The sensor data can be stored by the master storage device 336a, the first slave storage device 336b' and/or the second slave storage device 336b".

If the master storage device 336a is full, it can set the data rate for reception of the sensor data, e.g., by applying back-pressure. Additionally or alternatively, the master storage device can use an ACK signal (indicated by arrow 354) to inform a transmitting device about a capability to receive (and store) sensor data.

As only the master storage device 336a may be capable of setting the data rate of the reception of the sensor data, the slave storage devices 336b', 336b" may utilize a switch 338', 338" to prevent an overload. For example, if the first slave storage device 336b' is full, the first slave storage device may reset (indicated by arrow 362') and may open the first switch 388' (indicated by arrow 364'). If the second slave storage device 336b" is full, the second slave storage device may reset (indicated by arrow 362") and may open the second switch 388" (indicated by arrow 364").

If the first slave storage device 336b' and/or the second slave storage device 336b" determines a frame delimiter, the first slave storage device may close the first switch (indicated by arrow 366') and/or the second slave storage device 336b" may close the second switch (indicated by arrow 366"). In this way, the slave storage devices 336b', 336b" can lock onto the timing of the master storage device 336a.

Each storage device 336a, 336b', 336b" may receive information from a receiving device about a capability of receiving data (indicated by the arrows 370, 372, 374) and may transmit stored sensor data to a receiving device (indicated by the arrow 380, 382, 384).

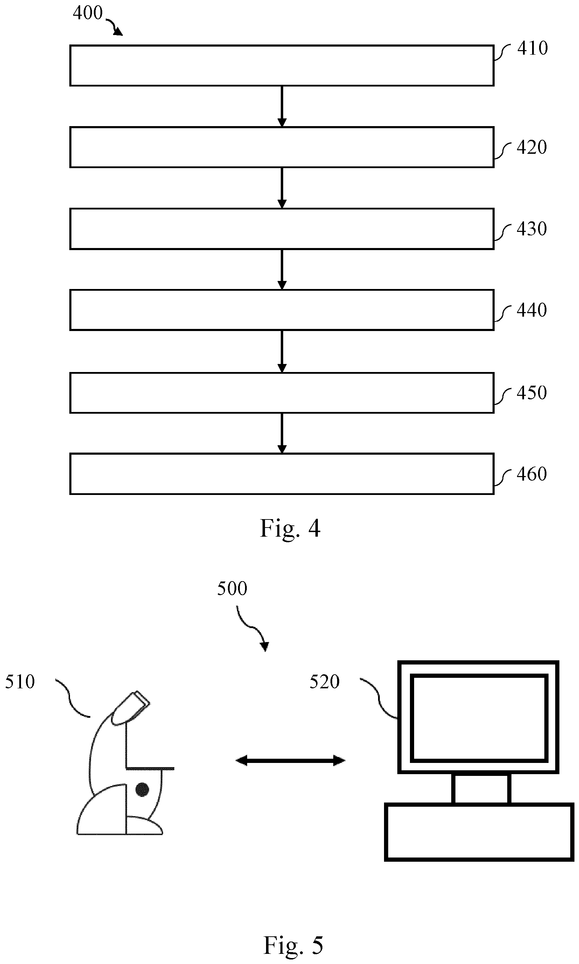

More details and aspects are mentioned in connection with the examples described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4 - 5).

Fig. 4 shows a flow chart of an example of a method 400 for an optical imaging system. The method 400 may be performed by an apparatus as described above, e.g., with reference to Fig. 1.

The method 400 comprises setting 410 a data rate for a reception of sensor data of a sensor of the optical imaging system. The data rate is set by a master storage device. The sensor data is indicative of a live view of a sample through a microscope of the optical imaging system. The method 400 further comprises receiving 420, at the master storage device and at the slave storage device, the sensor data based on the set data rate. Further, the method 400 comprises storing 430, at the master storage device, the received sensor data for transmission to a master display device. The method 400 further comprises storing 440, at the slave storage device, the received sensor data for transmission to a slave display device. Further, the method 400 comprises transmitting 450 the stored sensor data to a master display device from the master storage device. Further, the method 400 comprises transmitting 460 the stored sensor data to a slave display device, from the slave storage device.

More details and aspects are mentioned in connection with the examples described above and/or below. The example shown in Fig. 4 may comprise one or more optional additional features corresponding to one or more aspects mentioned in connection with the proposed concept or one or more examples described above (e.g., Fig. 1 - 3) and/or below (e.g., Fig. 5).

Some embodiments relate to a microscope comprising an apparatus as described in connection with one or more of the Figs. 1 to 3. Alternatively, a microscope may comprise of or can be communicatively connected to an apparatus as described in connection with one or more of the Figs. 1 to 3. Fig. 5 shows a schematic illustration of a system 500, e.g., an optical imaging system, configured to perform a method described herein, e.g., with reference to Figs. 4. The system 500 comprises a microscope 510 and a computer system 520. The microscope may comprise the apparatus as described above, e.g., with reference to Fig. 1 or a camera as described above, .e.g., with reference to Fig. 2. The microscope 510 is configured to take images and is connected to the computer system 520. The computer system 520 is configured to execute at least a part of a method described herein. The computer system 520 may be configured to execute a machine learning algorithm. The computer system 520 and microscope 510 may be separate entities but can also be integrated together in one common housing. The computer system 520 may be part of a central processing system of the microscope 510 and/or the computer system 520 may be part of a subcomponent of the microscope 510, such as a sensor, an actor, a camera or an illumination unit, etc. of the microscope 510.

The computer system 520 may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system 520 may comprise any circuit or combination of circuits. In one embodiment, the computer system 520 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g., camera) or any other type of processor or processing circuit. Other types of circuits that may be included in the computer system 520 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 520 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 520 may also include a display device, one or more speakers, and a keyboard and/or controller, which can include a mouse, trackball, touch screen, voice-recognition device, or any other device that permits a system user to input information into and receive information from the computer system 520.

More details and aspects are mentioned in connection with the examples described above. The example shown in Fig. 5 may comprise one or more optional additional features corresponding to one or more aspects mentioned in connection with the proposed concept or one or more examples described above (e.g., Fig. 1 - 4).

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a nontransitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference Signs

100 optical imaging system
105 base
110 sample
120 microscope
122 sensor
130 apparatus
132 interface
134 processor
136 storage device
140, 145 ocular display
160 arm
180 head-mounted display
222' first sensor
222" second sensor
224' live view of the first sensor data
224" live view of the second sensor data
230' first apparatus
230" second apparatus
236a master storage device
236b' first slave storage device
236b" second slave storage device
250 first image processing device
252 second image processing device
256 first frame buffer
258 second frame buffer
260 first mixer device
262 second mixer device
260 video converter device
264 formatter device
266 decoder device
268 alpha-blender device
270, 272 video converter device
280, 282 physical output interface port
288 video input interface
290 overlay renderer device
330 signal broadcaster
336a master storage device
336b' first slave storage device
336b" second slave storage device
352 receive sensor data
354 transmit ACK signal
362' reset the first slave storage device
362" reset the second slave storage device
364' open first switch
364" open second switch
366' close first switch
366" close second switch
370, 372, 374 receive information from a receiving device
380, 382, 384 transmit stored sensor data to a receiving device
388' first switch
388" second switch
400 method
410 setting a data rate
420 receiving sensor data
430 storing the received sensor data
440 storing the received sensor data
450 transmitting the stored sensor data
460 transmitting the stored sensor data
500 system
510 microscope
520 computer system

## Claims

1. An apparatus (130) for an optical imaging system (100), the apparatus (130) comprising one or more processors (134), a master storage device (136a) and a slave storage device (136b), wherein the apparatus (130) is configured to:
set, by the master storage device (136a), a data rate for a reception of sensor data of a sensor (122) of the optical imaging system (100), the sensor data indicative of a live view of a sample (110) through a microscope of the optical imaging system (100);
receive, at the master storage device (136a) and at the slave storage device (136b), the sensor data based on the set data rate;
store, at the master storage device (136a), the received sensor data for transmission to a master display device (300);
store, at the slave storage device (136b), the received sensor data for transmission to a slave display device (310);
transmit, from the master storage device (136a), the stored sensor data; and
transmit, from the slave storage device (136b), the stored sensor data.

2. The apparatus (130) according to claim 1, wherein
the apparatus (130) is configured to:
obtain information about a used storage capacity of the master storage device (136a); and
set the data rate based on the used storage capacity.

3. The apparatus (130) according to any one of the preceding claims, wherein
the apparatus (130) is configured to set the data rate by throttling the data rate in response to determining that the master storage device (136a) is full.

4. The apparatus (130) according to any one of the preceding ones, wherein
the apparatus (130) is configured to:
generate ability data indicative of an ability of the master storage device (136a) to store the sensor data; and
set the data rate by transmitting, to the optical imaging system (100), an acknowledgement signal based on the ability data, the acknowledgment signal indicative of the set data rate.

5. The apparatus (130) according to any one of the preceding claims, wherein
the apparatus (130) is configured to receive the sensor data at the slave storage device (136b) based on a storage capacity of the slave storage device (136b).

6. The apparatus (130) according to claim 5, wherein the apparatus (130) is configured to stop the reception of the sensor data at the slave storage device (136b) in response to determining that the slave storage device (136b) is full.

7. The apparatus (130) according to claim 6, wherein the apparatus (130) is configured to stop the reception of the sensor data at the slave storage device (136b) by opening a switch.

8. The apparatus (130) according to claim 7, wherein the apparatus (130) is configured to reset the slave storage device (136b) in response to determining that the switch is opened.

9. The apparatus (130) according to any one of the preceding claims, wherein the apparatus (130) is configured to reset the slave storage device (136b) in response to determining that the slave storage device (136b) is full.

10. The apparatus (130) according to any one of the claims 6-9, wherein the apparatus (130) is configured to reestablish the reception of the sensor data at the slave storage device (136b) in response to determining a frame delimiter of a frame of the sensor data.

11. The apparatus (130), further comprising
a first mixer device and a second mixer device, wherein the stored sensor data from the master storage device (136a) is transmitted to the first mixer device and the stored sensor data from the slave storage device (136b) is transmitted to the second mixer device.

12. The apparatus (130) according to claim 11, wherein
the apparatus (130) is further configured to:
transmit, from the first mixer device, a first output signal to the master display device;
transmit, from the second mixer device, a second output signal to the slave display device, the second output signal different from the first output signal, wherein
at least one of the first output signal or the second output signal is indicative of the generated visual overlay.

13. An optical imaging system (100), comprising
an apparatus (130) according to any one of the preceding claims.

14. A method (400), comprising:
setting (410), by a master storage device, a data rate for a reception of sensor data of a sensor of the optical imaging system, the sensor data indicative of a live view of a sample through a microscope of the optical imaging system;
receiving (420), at the master storage device and at the slave storage device, the sensor data based on the set data rate;
storing (430), at the master storage device, the received sensor data for transmission to a master display device;
storing (440), at the slave storage device, the received sensor data for transmission to a slave display device;
transmitting (450), from the master storage device, the stored sensor data; and
transmitting (460), from the slave storage device, the stored sensor data.

15. A computer program with a program code for performing the method according to claim 14 when the computer program is executed on a processor.
